(19) Europäisches Patentamt
European Patent Office
Office européen des brevets

(11) Publication number: **0 116 097 B1**

(12) # EUROPEAN PATENT SPECIFICATION

(45) Date of publication of patent specification: **21.09.88**

(51) Int. Cl.$^4$: **C 22 B 60/02**

(21) Application number: **82302571.3**

(22) Date of filing: **20.05.82**

(54) **Method of recovering uranium.**

(30) Priority: **22.05.81 US 266682**

(43) Date of publication of application:
**22.08.84 Bulletin 84/34**

(45) Publication of the grant of the patent:
**21.09.88 Bulletin 88/38**

(84) Designated Contracting States:
**BE CH DE FR GB IT LI SE**

(56) References cited:
**DE-A-3 148 228**
**US-A-3 394 997**
**US-A-3 961 027**

**CHEMICAL ABSTRACTS, vol. 81, no. 2, 15th July 1974page 68, column 1, abstract no. 5141d, Columbus, Ohio, US; & JP - C - 73 38320 (MITSUBISHI) 16-11-1973 (Cat. D)**

(73) Proprietor: **WESTINGHOUSE ELECTRIC CORPORATION**
**Westinghouse Building Gateway Center**
**Pittsburgh Pennsylvania 15222 (US)**

(72) Inventor: **Lahoda, Edward Jean**
**404 Morris Street**
**Pittsburgh Pennsylvania (US)**
Inventor: **Learn, Leland Leroy**
**218 MacFarlane Drive**
**Pittsburgh Pennsylvania (US)**
Inventor: **Bowler, James Edward**
**1540, Ashford Court**
**Wheaton, Illinois 60187 (US)**

(74) Representative: **Marchant, James Ian et al**
**Elkington and Fife High Holborn House**
**52/54 High Holborn**
**London WC1V 6SH (GB)**

**EP 0116097 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to recovering uranium from an aqueous calcium fluoride slurry.

In an ammonium diuranate conversion process for preparing uranium oxide powder, a waste stream is produced which contains uranium, fluoride, ammonium, and nitrate ions. To recover the ammonia and lower the fluoride levels, a calcium hydroxide or lime slurry is added which precipitates calcium fluoride. The ammonium diuranate (ADU) waste stream is processed in an ammonia stripping column, and the calcium fluoride slurry which is produced is sent to a settling lagoon where excess water is decanted and run off.

Some of the uranium remains in the calcium fluoride slurry as insoluble calcium uranate. This calcium uranate waste not only creates an expensive disposal problem but also represents a loss of a valuable resource. While other processes, such as that disclosed in Japanese Patent 48—38320, can be used to remove some of the uranium from the waste stream prior to the precipitation of the calcium fluoride, these processes are of no use in recovering the uranium which is present in most already existing ponds of calcium fluoride slurry.

Accordingly, the present invention resides in a method of recovering uranium from an aqueous calcium fluoride slurry which comprises (A) adjusting the pH of said slurry to between 2 and 3; (B) separating the supernatant fluid from said slurry; and (C) removing uranium from said supernatant fluid.

We have discovered a simple method for recovering uranium from a calcium fluoride slurry. Our process is reasonably inexpensive to operate and requires only very small amounts of capital for items such as pumps and perhaps an extra pond.

Furthermore, the uranium concentration in a calcium fluoride slurry can be reduced to a sufficiently low level to enable the slurry to be disposed of as a chemical waste, rather than as a nuclear waste. The uranium product, moreover, is compatible with the widely used uranium diuranate process and can be added directly to those processes.

In order that the invention can be more clearly understood, a convenient embodiment thereof will now be described, by way of example, with reference to the accompanying drawing which is a block diagram of a method of recovering uranium.

Referring to the drawing, a calcium fluoride slurry in pond 1 is forced by pump 2 past valve 3 through line 4 to which is added nitric acid and water from line 5 which reduces the pH of the slurry to between about 2 and about 3. After mixing in tank 6, the calcium settling agent in line 7 is added to the slurry in line 8. The slurry proceeds through valve 9 to second settling pond 10. After settling, the supernatant fluid, which contains uranium, is removed with pump 11 through line 12 and valve 13 to a uranium removal process. The calcium fluoride slurry in pond 10 is forced by pump 14 through line 15 and valve 3 into line 4 where additional water is added in line 5 and, if necessary, nitric acid. After mixing in tank 6, the slurry passes through line 8, valve 9, and line 16 back to pond 1. After settling in pond 1, the supernatant is removed with pump 11 through line 12 and valve 13.

The initial calcum fluoride slurry may contain about 1 to about 10 percent (all percentages herein are by weight) solids, of which at least 0.5 to 9.5 percent is calcium fluoride, and the rest is water, and from 1 to 1000 parts per million (ppm) uranium, usually in the form of some type of calcium uranate. A typical settled calcium fluoride slurry contains from 20 to 40 percent by weight solids and may contain any amount of uranium but typically it is from 150 to 200 ppm. It is preferable to dilute the slurry with water to from 5 to 10 percent solids as this enables one to get the most uranium out of the slurry while producing the least amount of liquid which must be treated with water glass to remove the uranium. This slurry should have less than a hundred ppm of iron present because the iron is dissolved with the uranium and would contaminate in the subsequent process. Generally, the invention will work with any liquid slurry of calcium fluoride which contains an insoluble uranium compound. The uranium in these slurries may be enriched in uranium 235, making it particularly valuable.

In the first step of this invention, the pH of the slurry is adjusted to from 2 to 3. If the pH is less than 2, the calcium fluoride begins to dissolve and if the pH is greater than 3, the uranium will not be solubilized. This pH adjustment may be performed with any acid that forms a soluble calcium and uranium compound such as hydrochloric or nitric acid. Nitric acid is preferred as it is compatible with the uranium recovery system on an ADU uranium dioxide powder plant. Any strength nitric acid may be used for this purpose. The nitric acid dissolves the insoluble calcium uranate, for example, according to the equation

$$CaU_2O_7+6HNO_3 \rightarrow 2UO_2(NO_3)_2+Ca(NO_3)_2+3H_2O.$$

After the uranium has been solubilized, it is preferable to add a calcium settling agent, a compound which does not affect the pH but which forms an insoluble compound with calcium, thereby reducing the amount of calcium in solution. The calcium settling agent does not precipitate the uranium because once the soluble calcium uranate compound is formed, it is fairly stable. Sodium sulfate, sodium carbonate, carbon dioxide gas, or other suitable compounds can be used as calcium settling agents, but the preferred settling agent is sodium sulfate because it is inexpensive. The amount of calcium settling agent is preferably from 0.01 to 0.50 percent.

In the next step of the process of this invention, it is necessary to separate the supernatant liquid from the remainder of these calcium fluoride

slurries. This can most advantageously be accomplished by permitting the slurry to settle, so that the supernatant can be pumped off the top of the slurry. Typically, a slurry will settle adequately within from 2 to 8 days.

In the next step of the invention, the uranium is removed from the supernatant liquid. This can be accomplished for example by using an ion exchange column as is well known in the art. However, while an ion exchange column will work if hydrochloric acid was used for the pH adjustment, it is not suitable if nitric acid was used. If the pH adjustment was made with nitric acid, it is preferable to use water glass (sodium silicate) to remove the uranium from the supernatant liquid. The recovery of uranium by the use of water glass is described in Japanese Patent 48—38320. After the uranium has been removed from the supernatant liquid, the remaining fluid can be discarded.

The remaining calcium fluoride sludge can then be repeatedly subjected to the process of this invention to reduce the uranium to the desired concentration. That is, water is added to the sludge to dilute it preferably to from 5 to 10 percent solids, the pH is adjusted, if necessary, to from 2 to 3 (though probably no pH adjustment will be necessary), the sludge is permitted to settle, the supernatant is removed, and the uranium is removed from the supernatant liquid. The process is repeated either until the uranium concentration is low enough so that the sludge can be disposed of as non-nuclear waste or until the uranium is too low for economic recovery, which typically requires from 4 to 7 repetitions.

After the sludge has been completely processed, it is preferably disposed of by bringing its pH up to from 9 to 10 using calcium hydroxide or other alkali. Cement is then added which sets up and forms an immobile solid which can be used as fill.

The invention will now be illustrated with reference to the following Example:

Example

One hundred milliliters of 3 percent by weight (w/o) calcium fluoride in water, containing 180 mg/l of uranium, was mixed with 300 ml of water containing 3 ml of 69 w/o nitric acid and 0.5 grams of sodium sulfate. This slurry was allowed to settle for twenty-four hours. The supernatant (224 ml) was decanted, analyzed, and found to contain 37 mg/l of uranium. The remaining slurry was remixed with 224 ml of water and again allowed to settle for 24 hours. The supernatant (268 ml) was decanted and found to contain about 21 mg/l of uranium. This procedure was repeated for three more cycles for which the following results were obtained.

| Uranium in supernatant | Water added |
|---|---|
| 14.5 mg/l | 243 ml |
| 7.8 mg/l | 248 ml |
| 5.2 mg/l | (Final sludge volume was 180 ml) |

These results indicate that uranium level in the calcium fluoride sludge can be reduced to 5.2 mg/l in about five cycles. While various levels of nitric acid and sodium sulfate can be used in the process of this invention, the levels reported in this example have provided the best uranium recovery with the lowest use of reagents.

**Claims**

1. A method of recoverying uranium from an aqueous calcium fluoride slurry characterized by (A) adjusting the pH of said slurry to between 2 and 3; (B) separating the supernatant fluid from said slurry; and (C) removing uranium from said supernatant fluid.

2. A method according to claim 1, characterized in that the calcium fluoride slurry is diluted to from 5 to 10 percent solids.

3. A method according to claim 1 or 2, characterized in that the pH is adjusted with nitric acid.

4. A method according to claim 1, 2 or 3, characterized in that, between step (A) and step (B), a calcium settling agent is added to the slurry.

5. A method according to claim 4, characterized in that the calcium settling agent is sodium sulfate.

6. A method according to any of claims 1 to 5, characterized in that step (B) is accomplished by settling for from 2 to 8 days followed by drawing off said supernatant fluid.

7. A method according to any of claims 1 to 6, characterized in that the uranium is removed from the supernatant fluid by the addition of water glass.

8. A method according to any of claims 1 to 6, characterized in that the uranium is removed from the supernatant fluid with an ion exchange column.

9. A method according to any of the preceding claims, characterized in that the additional last steps are included of adding water to the slurry, adjusting the pH of said slurry to between 2 and 3, if necessary, separating the supernatant fluid from said slurry, and removing uranium from said supernatant fluid.

10. A method according to claim 9, characterized in that the additional steps are repeated from 4 to 7 times.

11. A method according to any of claims 1 to 8, characterized in that the additional last step (is included of adjusting the pH of said slurry to from 9 to 10.

12. A method according to claim 11, characterized in that the additional last step is included of adding cement to the slurry to form a solid mass.

**Patentansprüche**

1. Ein Verfahren zur Gewinnung von Uran aus einem wässrigen Kalziumfluoridschlamm, gekennzeichnet durch (A) Einstellen des pH-Wertes des Schlammes auf einen Wert zwischen 2 und 3; (B) Trennen der überstehenden Flüssigkeit von dem Schlamm; und (C) Entfernen des Urans von der überstehenden Flüssigkeit.

2. Ein Verfahren nach Anspruch 1, dadurch gekennzeichnet, daß der Kalziumfluoridschlamm auf 5 bis 10% Feststoffgehalt verdünnt wird.

3. Ein Verfahren nach Anspruch 1 oder 2, dadurch gekennzeichnet, daß der pH-Wert mittels Salpetersäure eingestellt wird.

4. Ein Verfahren nach Anspruch 1, 2 oder 3, dadurch gekennzeichnet, daß zwischen dem Schritt (A) und Schritt (B) zu dem Schlamm ein kalziumabsetzendes Agens hinzugefügt wird.

5. Ein Verfahren nach Anspruch 4, dadurch gekennzeichnet, daß das kalziumniederschlagende Agens Natriumsulfat ist.

6. Ein Verfahren nach einem der Ansprüche 1 bis 5, dadurch gekennzeichnet, daß der Schritt (B) erreicht wird durch Absetzenlassen für zwei bis acht Tage, gefolgt durch Abziehen der überstehenden Flüssigkeit.

7. Ein Verfahren nach Ansprüche 1 bis 6, dadurch gekennzeichnet, daß das Uran von der überstehenden Flüssigkeit durch das Hinzufügen von Wasserglas entfernt wird.

8. Ein Verfahren nach einem der Ansprüche 1 bis 6, dadurch gekennzeichnet, daß das Uran von der überstehenden Flüssigkeit mit einer Ionenaustauschersäule entfernt wird.

9. Ein Verfahren nach einem der vorhergehenden Ansprüche, dadurch gekennzeichnet, daß die zusätzlichen letzten Schritte des Hinzufügens von Wasser zu dem Schlamm, Einstellens des pH-Wertes des Schlammes auf einen Wert zwischen 2 und 3, wenn notwendig, Trennens der überstehenden Flüssigkeit von dem Schlamm und Entfernens des Urans von der überstehenden Flüssigkeit eingeschlossen sind.

10. Ein Verfahren nach Anspruch 9, dadurch gekennzeichnet, daß die zusätzlichen Schritte vier- bis siebenmal wiederholt werden.

11. Ein Verfahren nach einem der Ansprüche 1 bis 8, dadurch gekennzeichnet, daß der zusätzliche letzte Schritt des Einstellens des pH-Wertes des Schlammes auf einen Wert zwischen 9 und 10 eingeschlossen ist.

12. Ein Verfahren nach Anspruch 11, dadurch gekennzeichnet, daß der zusätzliche letzte Schritt des Hinzufügens von Zement zu dem Schlamm zur Bildung einer festen Masse eingeschlossen ist.

**Revendications**

1. Procédé de récupération de l'uranium dans une bouillie de fluorure de calcium aqueuse, procédé caractérisé en ce qu'il comprend les différentes étapes consistant à=(A) régler le pH de la bouillie entre 2 et 3=(B) séparer le fluide qui surnage de la bouillie; et=(C) retirer l'uranium de ce fluide qui surnage.

2. Procédé selon la revendication 1, caractérisé en ce que la bouillie de fluorure de calcium est diluée jusqu'à environ 5 à 10% de matières solides.

3. Procédé selon l'une quelconque des revendications 1 et 2, caractérisé en ce que le pH est réglé par de l'acide nitrique.

4. Procédé selon l'une quelconque des revendications 1 à 3, caractérisé en ce que, entre l'étape (A) et l'étape (B), un agent de précipitation du calcium est ajouté à la bouillie.

5. Procédé selon la revendication 4, caractérisé en ce que l'agent de précipitation du calcium est du sulfate de sodium.

6. Procédé selon l'une quelconque des revendications 1 à 5, caractérisé en ce que l'étape (B) est réalisée en laissant déposer la bouillie pendant 2 à 8 jours, puis en pompant le fluide qui surnage.

7. Procédé selon l'une quelconque des revendications 1 à 6, caractérisé en ce que l'uranium est extrait du fluide qui surnage par addition de verre soluble.

8. Procédé selon l'une quelconque des revendications 1 à 6, caractérisé en ce que l'uranium est extrait du fluide qui surnage au moyen d'une coulonne d'échange d'ions.

9. Procédé selon l'une quelconque des revendications précédentes, caractérisé en ce que les dernières étapes supplémentaires consistent à ajouter de l'eau à la bouille, à régler le pH de cette bouillie entre 2 et 3 si cela est nécessaire, à séparer le fluide qui surnage de la bouillie, et à extraire l'uranium de ce fluide qui surnage.

10. Procédé selon la revendication 9, caractérisé en ce que les étapes supplémentaires sont répétées de 4 à 7 fois.

11. Procédé selon l'une quelconque des revendications 1 à 8, caractérisé en ce que la dernière étape supplémentaire consiste à régler le pH de la bouillie entre 9 et 10.

12. Procédé selon la revendication 11, caractérisé en ce que la dernière étape supplémentaire consiste à ajouter du ciment à la bouillie pour former une masse solide.

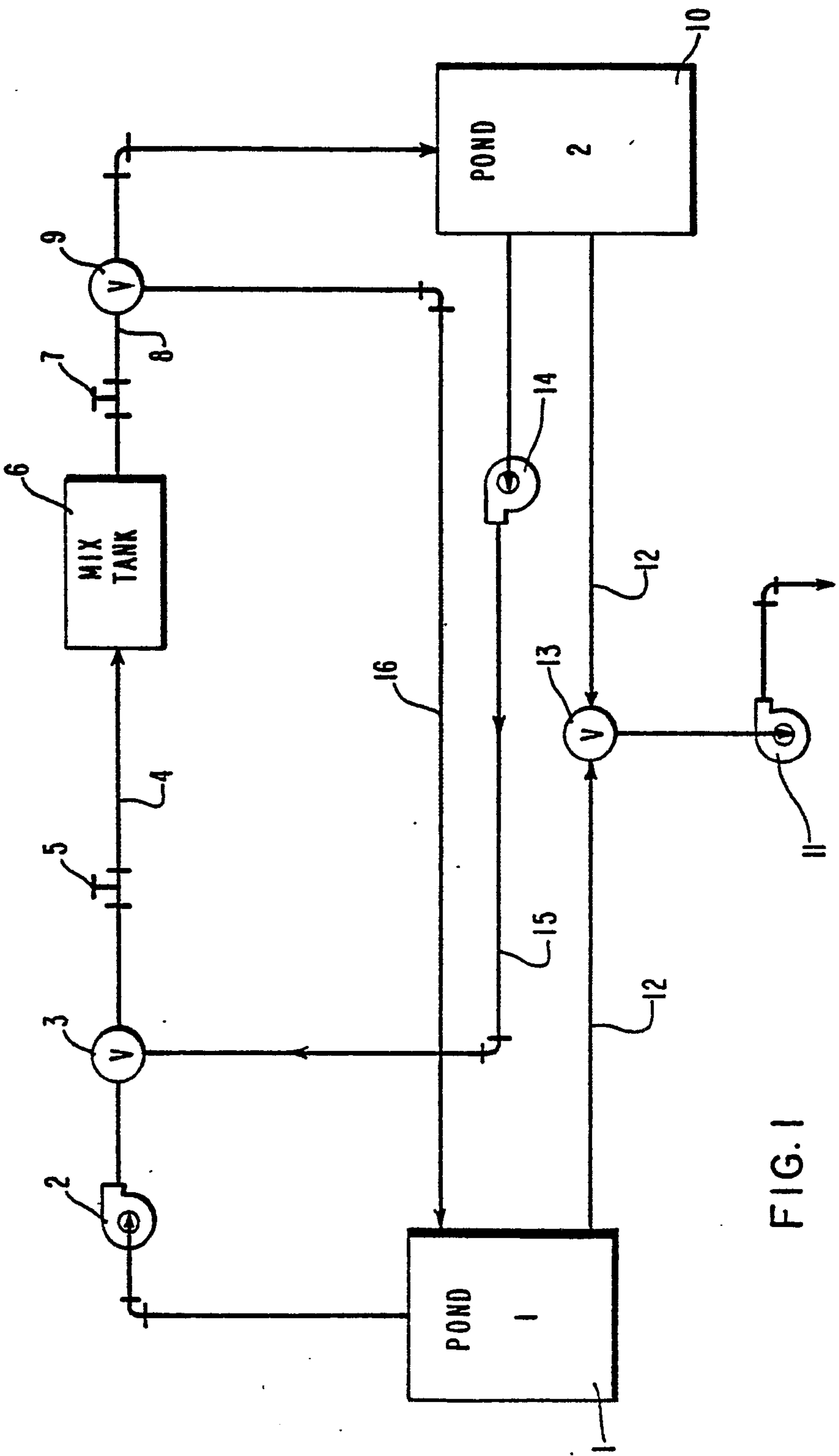


FIG. 1